# EUROPEAN PATENT APPLICATION

(11) **EP 4 525 233 A1**
(43) Date of publication of application: **19.03.2025**
(21) Application number: 23197399.1
(22) Date of filing: 14.09.2023
(51) Int. Cl.: H02G 3/32, H02G 13/00

(54) **A CLIP SUITABLE FOR BEING USED FOR MOUNTING A CONDUCTOR OF A LIGHTNING PROTECTION TO A STRUCTURE PROVIDED WITH THE LIGHTNING PROTECTION**

(71) Applicant: ABB SCHWEIZ AG, 5400 Baden (CH)
(72) Inventor: Rybak, Andrzej, 30-349 Krakow (PL); Rzepecki, Micha, 30-633 Krakow (PL)
(74) Representative: AOMB Polska Sp. z.o.o.

(57) **Abstract**

The present invention relates to clips for lightning protection systems suitable for being used for mounting a conductor to a structure, e.g. a wall of a building. This invention discloses a clip comprising a lower element, an upper element, one or two connecting portions, means for securing together, fixing means, and every element of the clip is made from a metal, characterized in that in a region of at least one of the ends of upper and lower element there are provided serrations that take part in fixing the clip on the conductor, and the lower element and the upper element are produced as two solid parts by an additive manufacturing process.

## Description

### TECHNICAL FIELD

The present invention relates to clips for lightning protection systems suitable for being used for mounting a conductor to a structure, e.g. a wall of a building.

### BACKGROUND OF THE DISCLOSURE

Lightning protection systems are commonly used for protection of buildings and for the safety of tenants and equipment within such constructions. Lightning clips are provided for securing electrical conductors of those systems to walls, columns etc., on their way from the top to the ground. Typically, clips used for lightning protection applications are obtained by means of sand casting or hot forging processes (in case of clips made of metal).

Document WO2008071986A1 discloses a clip for retaining a lightning conductor strip and attaching it to a surface. The clip comprises a base and a cap configured to engage with the base to retain the lightning conductor strip. The base and the cap have mutually engageable connecting elements for holding the base and the cap together at location of a first connection, and a screw for securing the base and cap at location of a second connection. The first and second connection locations are spaced apart and on sides of the clip of where the conductor is located in use. A second embodiment of the invention discloses the cap and base comprising mutually engageable connection means at the first connection location which, in this embodiment, consists of a hinge joint on the cap and a hinge socket on the base.

Traditional ways of producing clips are not sufficient and limited if there is a need for an increased complexity in structures of the clips. Therefore, additional machining is required, which increases time and costs of production. Furthermore, an assembling process in case of the standard clip is complicated due to dealing simultaneously with conductors and fixing them with bolts, nuts and washers - a relatively large number of parts that can be easily dropped during assembling process at an installation location.

Accordingly, it is a goal of the present disclosure to provide clips for lightning protection systems, that will have a reduced number of parts, while also allow for a more secure connection with the conductors of the lightning protection systems.

### SUMMARY OF THE DISCLOSURE

According to an aspect of the present invention there is provided a clip suitable for being used for mounting a conductor of a lightning protection to a structure provided with the lightning protection, comprising:
a lower element which is suitable to receive the conductor, having first and second ends and a central portion of the lower element,
an upper element which is suitable and configured for pressing the conductor onto the lower element and keeping it fixed, having first and second ends and central portion of the upper element,
one or two connecting portions provided and suitable for connecting the lower element and the upper element,
the lower flat element and the upper flat element are connected by means for securing together, said means also being configured for pressing both elements and the conductor between them,
wherein the clip is preferably provided with fixing means configured for fixing the clip to a structure provided with the lightning protection,
wherein every element of the clip, i.e. the lower element, the upper element and the connecting portion, is made from a metal,
characterized in that in a region of at least one of the ends of upper and lower element there are provided serrations that take part in fixing the clip on the conductor,
and the lower element and the upper element are produced as two solid parts by an additive manufacturing process.

The clip is made of metal chosen from a group comprising aluminum and its alloys, copper and its alloys and stainless steel.

Preferably the upper element is in the shape of a bar and has a flat central portion, the second end of the upper element has serrations,
the connecting portion is in form of a hinge wherein the hinge is formed by portions of the first end of the lower element and the first end of the upper element,
and the second end of the lower element is provided with a socket suitable for receiving the second end of the upper element, and the second end of the lower element has cavities corresponding to serrations on the second end of the upper element,
and the central portion of the lower element comprises the fixing means.

In one embodiment the lower element, the upper element and hinge are produced as interconnected parts in a single additive manufacturing process.

The hinge is of the type selected from a group comprising: a butt hinge, a ball bearing hinge, a spring-loaded butt hinge, a barrel hinge or a knife hinge.

In one of the preferred embodiments the hinge is configured such, that the upper element can rotate in a plane, which is passing through first and second ends of the lower element and is perpendicular to the lower element.

Preferably the hinge is configured such, that the upper element can rotate in a scissor-like motion and parallelly with respect to the lower element.

In one embodiment the lower element and the upper element are substantially T-shaped and have flat first ends and second ends, and the central portions of the upper and the lower elements have protruding connecting portions,
wherein pairs of first ends and second ends create two hollow symmetrical slots between the lower element and the upper element, said slots being configured for receiving ends of conductors of the lightning protection system,
and the first ends and the second ends have serrations on the sides of the lower and upper element facing each other in a mounted state.

In one of the preferred embodiments one of the connecting portions is hollow and the second the connecting portion is sized to fit within said hollow connecting portion, and both connecting portion have corresponding snap-fit means, preferably in a form of serrations.

### ADVANTAGES OF THE INVENTION

According to a present invention, the clips are manufactured by additive manufacturing process and obtained directly by a 3D printing process. Present solution also has an effect on installation process, where structure of the clip allows for self-holding functionality and easier application of the clip on the conductor. The proposed solution allows for more reliable connection and holding of the conductor, thanks to the use additional serrations within the clip.

A 3D printing technology, being one of the kinds of the additive manufacturing processes, offers freedom in the clip design, therefore the limitations related to the conventional manufacturing methods do not hinder a possibility to add all the new functionalities. The above-mentioned clip provides easier application capabilities and significantly reduces number of fixing elements required. Also - person using them needs less time to mount such clip.

### BRIEF DESCRIPTION OF THE DRAWINGS

The present disclosure will be now discussed with reference to the drawings, where:
Fig. 1 - depicts a cross-sectional view from the side of the clip with an integrated hinge and visible serrations,
Fig. 2 - depicts a top view of the clip with an integrated hinge including a cross-section of the integrated hinge,
Fig. 3 - depicts a first embodiment of the clip in the open state in isometric view,
Fig. 4 - depicts a first embodiment of the invention in the mounted state in isometric view,
Fig. 5 - depicts a cross section of the first embodiment,
Fig. 6 - depicts a variant of the clip according to the first embodiment, provided with a knife hinge,
Fig. 7 - is a cross-section of the hinge from Fig. 6,
Fig. 8 - depicts a first variant of a second embodiment of the clip,
Fig. 9 - depicts a second variant of the second embodiment of the clip,
Fig. 10 - is a cross-section of a possible realization of the second embodiment of the clip,
Fig. 11- depicts a cross-section of another possible realization of the second embodiment of the clip.

### List of numeric references:

1 - lower element
1a - first end of a lower element
1b - second end of a lower element
1c - central portion of a lower element
2 - upper element
2a - first end of an upper element
2b - second end of an upper element
2c - central portion of an upper element
3 - connecting portion
4 - serrations
5 - hinge
6 - slot
7 - snap-fit means

### DETAILED DESCRIPTION OF THE DISCLOSURE

For a proper understanding of the disclosure, in the detailed description below, corresponding elements or parts of different embodiments will be denoted with identical reference numerals in the drawings.

Present invention is directed to a clip suitable for being used for mounting a conductor of a lightning protection to a structure provided with the lightning protection.

The invention depicts the clip comprising a lower element 1 which is suitable to receive the conductor and an upper element 2 which is suitable and configured for pressing the conductor onto the lower element 1 and keeping it fixed. The lower element 1 has a first 1a and second 1b ends and a central portion 1c of the lower element 1. The upper element 2 has a first 2a and second 2b ends and central portion 2c of the upper element 2.

In a region of at least one of the ends 1a, 1b, 2a, 2b of upper and lower element 1, 2 there are provided serrations 4 that take part in fixing the clip on the conductor.

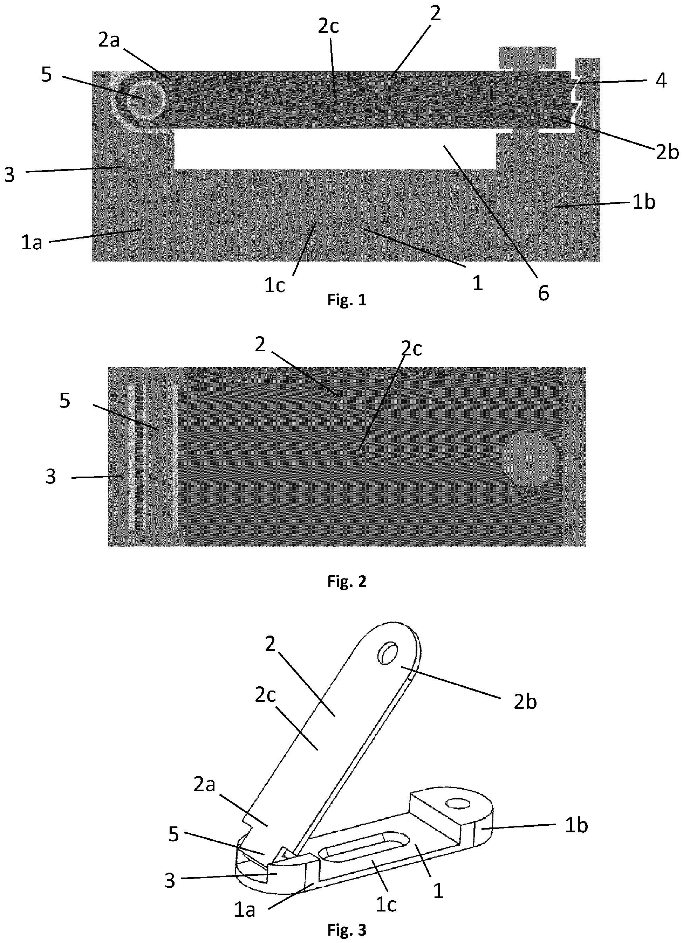

The clip comprises one or two connecting portions 3 provided and suitable for connecting the lower element 1 and the upper element 2. The lower flat element 1 and the upper flat element 2 are connected by means for securing together. Those means are also configured for pressing both elements 1, 2 and inserted conductor between them together. Above-mentioned parts are seen on Fig. 1, 2, 4, 5, 8 and 9.

Preferably, the clip has fixing means which are configured for fixing the clip to a structure provided with the lightning protection, e.g. to walls or roofs of a building, etc. Person can easily apply clips in desired places and later start to fix them with a use of fasteners. In this embodiment, fixing means are fastening elements. Figs. 3-7 disclose only a mounting hole for fastening elements. Each part of the clip - the lower element 1, the upper element 2 and the connecting portion 3, is made from a metal. Preferable metals are aluminum and its alloys, copper and its alloys, stainless steel or any steel except galvanized stainless steel. Preferable metal of choice is harder than material of conductors of a lightning protection to be provided with these clips - which allows serrations (when they are present and of relevant type) to "bite into" the material of said conductors and create a stable connection.

Present invention is suitable for mounting every kind of conductor of a lightning protection e.g., flat bars, rods or wires.

The lower element 1 and the upper element 2 are produced as two solid parts by an additive manufacturing process. Such process allows to produce those elements together with more complex and smaller details, like e.g. serrations 4, that would be otherwise troublesome and costly to make by e.g. machining.

The abovementioned parts are shared across all embodiments and variants of the clip according to the invention.

A first embodiment of the invention is shown on Fig. 1.

In this embodiment, the lower element 1 is generally U-shaped in cross section, wherein its central portion 1c is substantially flat while its ends 1a, 1b are provided with parts that are protruding away and perpendicularly with respect to the central portion 1c.

On the other hand - the upper element 2 is in the shape of a bar, and it comprises a flat central portion 2c while its the second end 2b is provided with serrations 4, that are protruding in the direction of the length of the upper element 2 (see Fig. 1).

The protrusion located at the second end 1b of the lower element 1 is shaped such, that it forms a socket corresponding in shape to the second end 2b of the upper element 2. Also - said socket is provided with cavities that have complementary shape to the serrations 4 at the second end 2b of the upper element. This allows for self-holding effect once the upper element 2 snaps into the lower element 1 - and the clip won't open on its own, which is useful during mounting operation - as it won't easily detach from the conductor of the lightning protection system.

In the region of the first ends 1a, 2a of the lower and upper elements 1, 2 - there is provided a connecting portion 3, which is in form of a hinge 5. This hinge 5 is created by corresponding parts of the lower and upper elements 1, 2 - and this can be provided in several different configurations.

Variants presented on Fig. 1, 2, 5, 6 and 7 are each a case, where protrusion on the first end 1a of the lower element 1 is shaped to provide a pin, while the first end 1b of the upper element 2 is shaped to provide a knuckle/barrel of the hinge, so that the upper part 2 can rotate about the pin and with respect to the lower part 1.

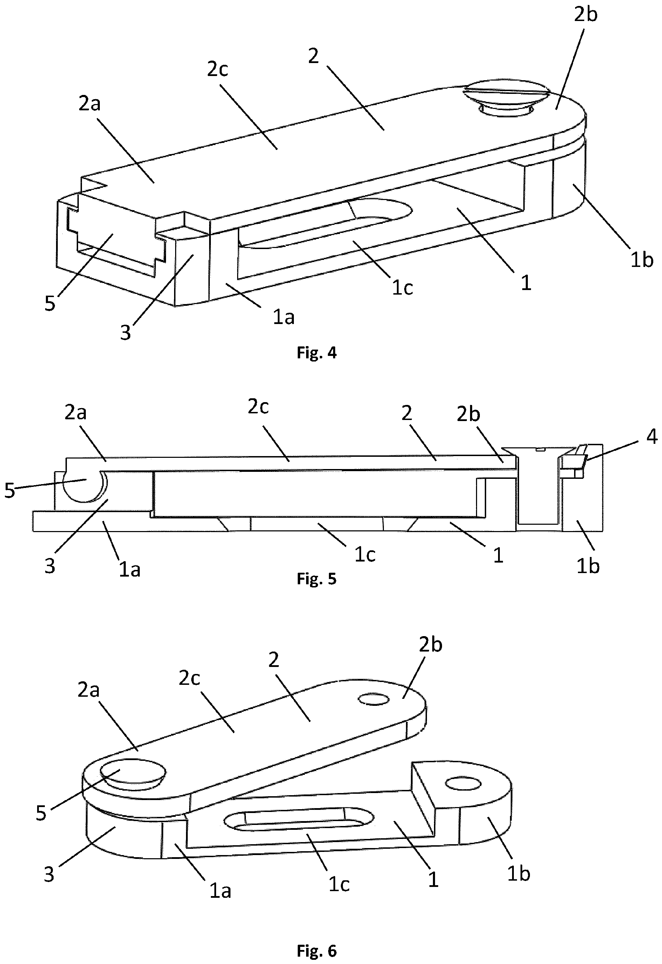

Said hinge 5 allows the clip to open by rotating the upper element 2 and to insert the conductor between the upper element 2 and the lower element 1, and later on - to easily close the clip (thanks to the serrations 4 interacting with the cavities). Thus, the clip provides a closable socket with a slot 6 for the conductor of the lightning protection system. An open state of the clip is shown on Fig. 3, and a closed state is shown on Fig. 1 and 4.

On the other hand - variants presented on Fig. 3, 4 and 5 - present different configurations, wherein the first end 2a of the upper element 2 is shaped to provide pin/pins of the hinge, which are cooperating with (received in) corresponding sockets formed in the first end 1a of the lower element 1. In the variant shown on Fig. 4 - there are provided two side pins on the first end 2a of the upper element that are received in two sockets on the first end 1a of the lower element 1, and on the variant shown on Fig. 5 - there is provided a single pin.

From the above it is clearly visible, that this invention is suitable for many kinds of hinges, e.g. ball bearing hinges, spring-loaded butt hinges, barrel hinges or knife hinges.

Thanks to the use of additive manufacturing process - whole clip, together with parts of the hinge 5 and serrations 4 etc. - can be produced altogether, as one whole clip, without the need for any further machining. The additive manufacturing ensures sufficient accuracy and the ability to achieve complex shapes that would be very difficult to achieve with traditional methods. The printed clip does not require assembly of parts as it is manufactured as one whole clip.

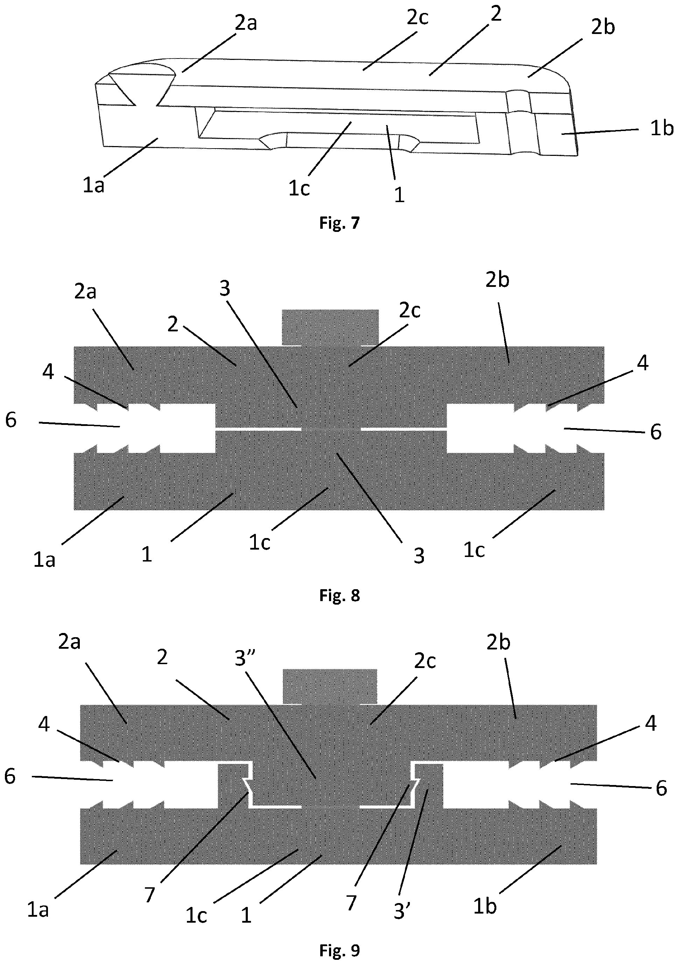

An embodiment of the knife hinge is shown on Fig 6 and 7. The knife hinge allows parallel rotation of the upper element 2 with respect to the lower element 1. Said knife hinge allows the clip to open by rotating the upper element 2 and to insert the conductor between the upper element 2 and the lower element 1 and to close the clip. For clarity, Figs. 6 and 7 do not show serrations in the region of second ends 1b, 2b of the lower and upper elements 1, 2 - but such serrations would be also present there, to help in locking in place the upper element 2 once it rotates into the locked position. This embodiment of the clip with said hinge allows for inserting the clip in narrow places and conduct opening and closing the clip in order to insert the conductor.

Fig. 2 discloses this embodiment of the invention from above and shows the cross-section of the hinge 5.

In order to completely fix the clip with the conductor inside, means for securing are applied. The means for securing are seen on Fig. 1-5. In this embodiment of the invention a bolt/screw is used. The application is not limited only to bolts but also other kinds of fasteners could be applied.

A second embodiment of the invention is shown on Figs. 8-10. In this embodiment, the lower element 1 and the upper element 2 are substantially T-shaped in cross-section. The first 1a, 1b and second 2a, 2b ends of upper 2 and lower 1 elements are provided by the 'arms' of the T-shapes. Central portions 1c, 2c of the lower element 1 and the upper element 2 have protruding connecting portions 3, provided by the 'legs' of the T-shapes.

In this embodiment of the invention, the two connecting portions 3 of the clip are facing each other and are in contact with each other, in the mounted state.

Pairs of first ends 1a, 2a and second ends 1b, 2b create two hollow symmetrical slots 6 between the lower element 1 and the upper element 2. Those slots 6 are suitable for inserting ends (or other parts) of conductors of the lightning protection system into them. The first ends 1a, 2a and the second ends 1b, 2b have serrations 4 on the sides of the lower 1 and upper element 2 facing each other in the mounted state.

The second embodiment of the clip does not comprise fixing means configured for fixing the clip to a structure provided with the lightning protection, e.g. to walls or roofs of a building, etc. The second embodiment of the invention is configured to simply connect two conductors of the lighting protection together, especially - the ends of the conductors.

The lower element 1 and the upper element 2 are in the mounted state when their respective connecting portions 3 are in contact and means for securing them together are applied. Serrations 4 allow for fixing conductors inserted in slots 6 and keeping them in a self-holding position. Fig. 8, 9 and 10 show exemplary placements of serrations 4. Serrations 4 allow for self-holding of the clip on conductors during assembly, because said serration 'bite' into conductors - for this purpose it is preferable to ensure, that material of the clip is harder/stronger than the material of the conductors, so that the serrations 4 can effectively attach to them.

In this embodiment of the invention, in the mounted state, central portions 3 of both the upper and the lower elements 1, 2 are in contact like it is shown in Fig. 8 and 9. The means for securing are depicted here in the form of a bolt/screw, which presses both the upper and the lower elements 1, 2 together.

In a different variant of the second embodiment of the invention (shown on Fig. 9), one of the connecting portions is a hollow connecting portion 3' and the second connecting portion 3" is sized to fit within said hollow connecting portion 3'. Both connecting portions 3', 3" have corresponding snap-fit means 7. Preferably, one of the connecting portions 3' has snap-fit means 7 in a form of serrations. The second connecting portion 3" has the snap-fit means 7 in the form of cavities. Said cavities have corresponding shape to the serrations, what allows for self-holding effect when serrations are snapped in cavities.

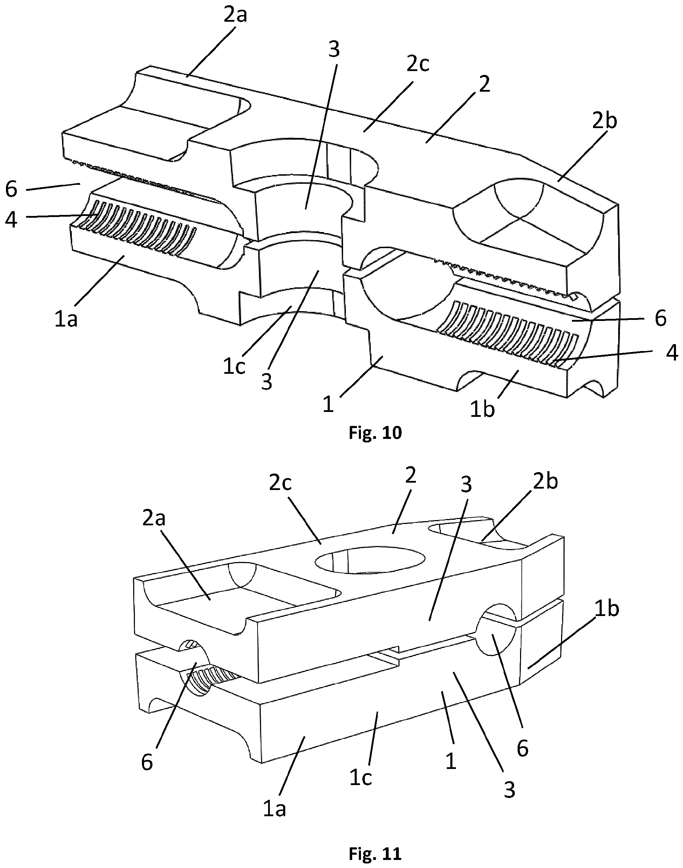

In a third variant of the second embodiment of the invention (shown on Fig. 11), pairs of first ends 1a, 2a and second ends 1b, 2b create two hollow symmetrical slots 6 between the lower element 1 and the upper element 2 which are perpendicular to each other (not all serrations are shown on Fig. 11). This variant allows for connecting two conductors which are perpendicular to each other.

Such serrations and cavities are conveniently produced by the additive manufacturing method in the same process which produces the upper element 2 or the lower element 1. The additive manufacturing method ensures sufficient accuracy and the ability to achieve complex shapes that would be very difficult to achieve with traditional methods.

The second embodiment of the clip - first variant (Fig. 8) can be manufactured by 3D printing each part separately.

The second embodiment of the clip, its second variant (Fig. 9), is preferably manufactured as the one whole clip, since its geometry does not allow for disassembling. However, parts of this variant may also be manufactured separately and later on - combined (by engaging snap fit means 7 together).

## Claims

1. A clip suitable for being used for mounting a conductor of a lightning protection to a structure provided with the lightning protection, comprising:
a lower element (1) which is suitable to receive the conductor, having first (1a) and
second (1b) ends and a central portion (1c) of the lower element (1),
an upper element (2) which is suitable and configured for pressing the conductor onto the lower element (1) and keeping it fixed, having first (2a) and second (2b) ends and
central portion (2c) of the upper element (2),
one or two connecting portions (3) provided and suitable for connecting the lower element (1) and the upper element (2),
the lower flat element (1) and the upper flat element (2) are connected by means for securing together, said means also being configured for pressing both elements (1, 2) and the conductor between them,
wherein the clip is preferably provided with fixing means configured for fixing the clip to a structure provided with the lightning protection,
wherein every element of the clip, i.e. the lower element (1), the upper element (2) and the connecting portion (3), is made from a metal,
**characterized in that** in a region of at least one of the ends (1a, 1b, 2a, 2b) of upper and lower element (1, 2) there are provided serrations (4) that take part in fixing the clip on the conductor, and the lower element (1) and the upper element (2) are produced as two solid parts by an additive manufacturing process.

2. The clip according to claim 1, **wherein** the clip is made of metal chosen from a group comprising aluminum and its alloys, copper and its alloys and stainless steel.

3. The clip according to claim 2, **wherein**
the upper element (2) is in the shape of a bar and has a flat central portion (2c),
the second end (2b) of the upper element (2) has serrations (4),
the connecting portion (3) is in form of a hinge (5) wherein the hinge (5) is formed by portions of the first end (1a) of the lower element (1) and the first end (2a) of the upper element (2),
and the second end (1b) of the lower element (1) is provided with a socket suitable for receiving the second end (2b) of the upper element (2), and the second end (1b) of the lower element (1) has cavities corresponding to serrations (4) on the second end (2b) of the upper element (2),
and the central portion (1c) of the lower element (1) comprises the fixing means.

4. The clip according to claim 3, **wherein** the lower element (1), the upper element (2) and hinge (5) are produced as interconnected parts in a single additive manufacturing process.

5. The clip according to claim 4, **wherein** the hinge (5) is of the type selected from a group comprising: a butt hinge, a ball bearing hinge, a spring-loaded butt hinge, a barrel hinge or a knife hinge.

6. The clip according to claim 5, **wherein** the hinge (5) is configured such, that the upper element (2) can rotate in a plane, which is passing through first (1a) and second (1b) ends of the lower element and is perpendicular to the lower element (1).

7. The clip according to claim 5, **wherein** the hinge (5) is configured such, that the upper element (2) can rotate in a scissor-like motion and parallelly with respect to the lower element (1).

8. The clip according to claim 2, **wherein** the lower element (1) and the upper element (2) are substantially T-shaped and have flat first ends (1a, 2a) and second ends (1b, 2b),
and the central portions (1c, 2c) of the upper and the lower elements (1, 2) have protruding connecting portions (3),
wherein pairs of first ends (1a, 2a) and second ends (1b, 2b) create two hollow symmetrical slots (6) between the lower element (1) and the upper element (2), said slots (6) being configured for receiving ends of conductors of the lightning protection system,
and the first ends (1a, 2a) and the second ends (1b, 2b) have serrations (4) on the sides of the lower and upper element facing each other in a mounted state.

9. The clip according to claim 5, **wherein** one of the connecting portions (3) is hollow and the second the connecting portion (3) is sized to fit within said hollow connecting portion (3), and both connecting portion have corresponding snap-fit means (7), preferably in a form of serrations.
